# EUROPEAN PATENT SPECIFICATION

(11) **EP 2 634 216 B1**
(45) Date of publication and mention of the grant of the patent: **04.12.2019**
(21) Application number: 11836658.2
(22) Date of filing: 28.10.2011
(51) Int. Cl.: C08L 67/03, C08L 69/00, C08K 3/08, C08J 5/00

(54) **POLYESTER/POLYCARBONATE BLEND HAVING EXCELLENT THERMAL STABILITY AND COLOR STABILITY**
POLYESTER/POLYCARBONAT-MISCHUNG MIT ERHÖHTER WÄRME- UND FARBSTABILITÄT
MÉLANGE DE POLYESTER/POLYCARBONATE PRÉSENTANT UNE EXCELLENTE STABILITÉ THERMIQUE ET UNE EXCELLENTE STABILITÉ DES COULEURS

(30) Priority: 28.10.2010 KR 20100105841
(43) Date of publication of application: 04.09.2013
(73) Proprietor: SK Chemicals Co., Ltd., Seongnam-si, Gyeonggi-do 463-400 (KR)
(72) Inventor: HWANG, Dong-June, Gyeonggi-Do 440-745 (KR); HWANG, Jeoung-Jun, Gyeonggi-Do 431-701 (KR); LIM, Jae-Bong, Gyeonggi-Do 431-080 (KR); KIM,Tae-Young, Gyeonggi-Do 442-152 (KR); BAE, Sung-Su, Gyeonggi-Do 463-060 (KR)
(74) Representative: IPAZ
(86) International application number: PCT/KR2011/008131
(87) International publication number: WO 2012/057566

(56) References cited:
- WO-A1-2009/005318
- WO-A1-2009/028817
- KR-A- 20060 066 965
- KR-A- 20070 071 592
- KR-A- 20090 008 825

## Description

### [Technical Field]

This invention relates to a polyester/polycarbonate blend, and more particularly to a polyester/polycarbonate blend having superior thermal stability and superior color stability.

### [Background Art]

Since polyester resin has superior mechanical strength, heat resistance, transparency and gas barrierability, the polyester resin is suitable for a container for drink or beverage such as juices, soft drinks or carbonated soft drinks, a packing film or a material of an audio/video film and thus used in volume. Sheets or boards of polyester have good transparency and excellent mechanical strength, so they are widely used as the materials for cases, boxes, partitions, store shelves, protection panels, blister packing, construction materials, interior materials or finishing materials, and so on. Recently, as new use of the polyester resin, the polyester resin is molded into a thick plastic sheet, and the produced sheet is used for the production of an interior decoration board, a signboard, and so on. However, the polyester has a relatively low heat resistance compared with conventional sheet forming materials, such as acryl (PMMA: Polymethyl Methacrylate) or polycarbonate (PC), and is not desirable for an outdoor use in which the temperature changes greatly in accordance with the change of seasons. Therefore, to improve the heat resistance of the polyester resin, various researches have been conducted, and one of the representative methods is the blending with PC.

However, polyethylene terephthalate (PET), a representative example of polyester, and PC are different from each other in melt viscosity and molecular structure. Thus, simple mixture of PET and PC cannot improve the heat resistance. The PET, a representative crystalline polymer, owing to its crystal structure, increases the mechanical strength in the blend and assigns the toughness to a main chain of whole polymer. Among the crystalline PETs, a homopolyester has relatively fast crystallization rate compared with a copolyester, so the homopolyester has high heat distortion temperature (HDT), and the homopolyester is distributed as domains having the sizes of several tens to several hundreds of nanometers in the blend matrix. Thereby, the heat resistance of the blend increases. When the size of the domain is reduced and the distribution amounts of the domain is increased, the transparency and heat resistance of the blend are improved. The heat resistance is strongly affected by the domain distribution.

To solve a problem on the heat resistance of the polyester/polycarbonate blend, various copolymers or various complex catalysts are developed. For example, U.S. patent No. 3,864,428 discloses a blend composition of polyester and PC, U.S. patent No. 4,879,355 discloses a method of introducing PET/bisphenol-A copolymer into a blend of PET and PC to improve transparency and heat resistance of the blend. And recently, U.S. patent No. 5,942,585 discloses the blend of PC and 1,4-cyclohexanedimethanol (CHDM)-copolymerized polyester (for example P(ET-CT): poly(ethylene terephthalate-co-1,4-cyclohexylene dimethylene terephthalate). Also, U.S. patent No. 6,723,768 B2 discloses that the color stability of polyester/polycarbonate blend is improved when the amount of titanium is less than 30 ppm and yellowness of the blend is closely related to the amount of titanium contained in each polymer. WO 2009/005318 A1 and WO 2009/028817 A1 disclose compositions comprising P(ET-CT; PET; and polycarbonate.

The P(ET-CT) is copolyester having a fundamental structure of terephthalic acid, ethylenglycol and CHDM, and is called as PCTG(glycol-modified poly(1,4-cyclohexylenedimethylene terephthalate) or PETG(CHDM-modified polyethylene terephthalate). The P(ET-CT), which has been commercially produced in the world only by Eastman Chemical Company in USA and SK Chemicals CO., Ltd, in South Korea, does not contain materials harmful to human beings, is environment-friendly, and has superior moldability, processability and transparency. The P(ET-CT) can be manufactured by using various catalysts, however, commercially titanium-based catalyst is used for the production. The titanium-based catalyst has excellent polymerization reactivity compared with other catalysts, however, it has a drawback of lowering the color stability (yellowness) of the blend according to the amount of the titanium used.

With respect to the P(ET-CT)/PC blend, a study for improving compatibility between two resins has actively been carried out since 1980s. The P(ET-CT)/PC blend shows new physical property mutually supplemented according to composition of each component. However, the heat resistance of the blend is not increased even though the amount of the P(ET-CT) is increased, and only when the amount of the P(ET-CT) is little, the heat resistance(thermal stability) of the blend is proportional to the amount of the P(ET-CT). In addition, when the amount of the P(ET-CT) becomes much, color of the P(ET-CT)/PC blend is changed by the titanium catalyst and thus the usage of the blend is undesirably restricted. While excess amount of P(ET-CT) is used, it is inevitable to use an additive for suppressing the activity of the catalyst. Besides the heat resistance improvement, there exists a limitation to mutually supplementing the physical property.

### [Disclosure]

### [Technical Problem]

Therefore, it is an object of present invention to provide a polyester/polycarbonate blend having superior thermal stability and superior color stability.

### [Technical Solution]

In order to achieve the object, the present invention provides a polyester/ polycarbonate blend comprising: (a) P(ET-CT) (poly(ethylene terephthalate-co-1,4-cyclohexylene dimethylene terephthalate) which is copolymerized with 1,4-cyclohexanedimethanol (CHDM) of 40 to 90 mol % with respect to total diol components, (b) polyethylene terephthalate (PET), (c) polycarbonate (PC) and (d) germanium of 1 to 100 ppm (weight ratio) with respect to total polyester/polycarbonate blend, wherein with respect to total polyester/polycarbonate blend, the amount sum of the P(ET-CT) and PET is 50 to 90 wt%, the amount of the PET is 1 to 6 times in weight ratio with respect to the P(ET-CT), and the amount of the PC is 10 to 50 wt% and wherein the germanium is contained as a catalyst in the P(ET-CT) polymerization, and an amount of the catalyst is 20 to 200 ppm (weight ratio) with respect to the polymerized P(ET-CT).

### [Advantageous Effects]

The polyester/polycarbonate blend of the present invention contains the P(ET-CT) which is copolymerized with 1,4-cyclohexanedimethanol (CHDM) of 40 to 90 mol % with respect to total diol components by using germanium catalyst, the PET and the PC, so that color-b (yellowness) is 4 or less, and the color stability (transparency) is good and the thermal stability (heat resistance) is also excellent. In addition, the polyester/polycarbonate blend of the present invention is more economical since the amount of the PET is 1 to 6 times (weight ratio) the P(ET-CT) which is relatively expensive.

### [Mode for Invention]

A more complete appreciation of the invention, and many of the attendant advantages thereof, will be better appreciated by reference to the following detailed description.

The polyester/polycarbonate blend of the present invention is for enhancing thermal stability, color stability, and comprises (a) P(ET-CT) (poly(ethylene terephthalate-co-1,4-cyclohexylene dimethylene terephthalate) which is copolymerized with 1,4-cyclohexanedimethanol (CHDM) of 40 to 90 mol % with respect to total diol components, (b) polyethylene terephthalate (PET), (c) polycarbonate (PC) and (d) germanium.

The P(ET-CT) which is copolymerized with 1,4-cyclohexanedimethanol (CHDM) of 40 to 90 mol % with respect to total diol components, used in the present invention is copolyester polymerized with acid component and diol component, wherein terephthalic acid component is used as the acid component, and 1,4-CHDM of 40 to 90 mol%, preferably 50 to 70 mol% and ethylene glycol of 10 to 60 mol%, preferably 30 to 50 mol% are used as diol component. In this specification, the term "terephthalic acid component" includes terephthalic acid, alkyl ester (lower alkyl (1-4 carbon numbers) ester such as monomethyl, monoethyl, dimethyl, diethyl or dibutyl ester) of terephthalic acid, and acid anhydride etc. thereof, which produce terephthaloyl moiety when reacted with diol component (glycol component). When the amount of 1,4-CHDM is too little in the P(ET-CT), haze may occur. While when the amount of 1,4-CHDM is too much in the P(ET-CT), it is uneconomical without special merits. The weight-average molecular weight (Mw) of P(ET-CT) is for example, 40,000 to 55,000.

The PET used in the present invention contains a conventional PET which is polymerized with terephthalic acid component as acid component and ethylene glycol as diol component. Depending on need, the PET of the present invention, may contain terephthalic acid, ethylene glycol and /or alkylene glycol having 3 to 6 carbon atoms, to be copolymerized with little other components. Alternatively, isophthalic acid, 1,4-CHDM or diethylene glycol can be copolymerized with the copolymerized-PET component. When the isophthalic acid is copolymerized, the amount thereof is 1 to 10 mol% with respect to total acid component, and when 1,4-CHDM or diethylene glycol is copolymerized, the amount thereof is 1 to 10 mol% with respect to total diol component. The Mw of PET is for example, 30,000 to 55,000.

With respect to total polyester/polycarbonate blend, the amount sum of the P(ET-CT) and PET is 50 to 90 wt%, preferably 60 to 80 wt%. The amount of the PET is 1 to 6 times in weight ratio, preferably 2 to 4 times with respect to the P(ET-CT). When the amount of the P(ET-CT) and PET is less than 50 wt%, the transparency of the blend may be degraded, and when the amount of the P(ET-CT) and PET is more than 90 wt%, the heat resistance of the blend may be reduced. When the amount of the PET is less than 1 time in weigh ratio with respect to the P(ET-CT), it is uneconomical, and when the amount of the PET is more than 6 times, the transparency of the blend may be degraded.

As the polycarbonate (PC) component in the present invention, a conventional polycarbonate used in a blending of polyester/polycarbonate can be used. For example, the polycarbonate of injection molding and/or extrusion molding grade, which is basically prepared with bisphenol-A as a main component, can be variously used. The amount of the PC is 10 to 50 wt%, preferably 20 to 40 wt% with respect to total polyester/polycarbonate blend. When the amount of PC is less than 10 wt% with respect to total polyester/polycarbonate blend, the heat resistance may be reduced. When the amount of PC is more than 50 wt%, the polyester/polycarbonate blending effect cannot be obtained and the transparency may be degraded. The Mw of the PC is for example 35,000 to 60,000.

The germanium used in the present invention is added for improving the yellowness of the 1,4-CHDM copolymerized polyester/polycarbonate blend. The amount of germanium is 1 to 100 ppm (weight ratio), preferably 5 to 50 ppm (weight ratio) with respect to total polyester/polycarbonate blend. When the amount of germanium is less than 1 ppm with respect to total polyester/polycarbonate blend, the color of the polyester/polycarbonate blend may be changed (yellowed), and when the amount of germanium is more than 100 ppm with respect to total polyester/polycarbonate blend, it is uneconomical without special merits because the expensive germanium raises the manufacturing cost of the blend.

The germanium is contained as a catalyst in P(ET-CT) polymerization. The amount of the catalyst added is 20 to 200 ppm (weight ratio), preferably 30 to 150 ppm (weight ratio) with respect to polymerized P(ET-CT). When the amount of the germanium catalyst is less than 20 ppm, the germanium dose not sufficiently work as the catalyst in an esterification reaction or a transestrification reaction of the acid component and diol component or polycondensation reaction so that the reaction rate may be reduced. When amount of the germanium catalyst is less than 1 ppm (weight ratio) with respect to total polyester/polycarbonate blend, and more than 200 ppm, it is uneconomical without special merits because the expensive germanium raises the manufacturing cost of the blend.

The P(ET-CT) can be produced by a conventional method for preparing coplymeric polyester resin, except that germanium catalyst must be used. For example, first, (i) the acid components and the diol components are subject to an esterification reaction or a trans-esterification reaction in the presence of germanium catalyst at the increased pressure of 0.2 ∼ 3.0 kg/cm² and the temperature of 200 ∼ 300°C during an average retention time of 2 ∼ 10 hours. Preferably, the acid components include terephthalic acid component. The diol components includes 40 ∼ 90 mol% of 1,4-cyclohexane dimethanol and 10 to 60 mol% of ethylene glycol, the amount by 1,4-cyclohexane dimethanol and ethylene glycol being 100 mol%. Next, (ii) the product of the esterification reaction or the trans-esterification reaction is subject to a polycondensation reaction at the reduced pressure of 400 ∼ 0.1 mm Hg and at the temperature of 240 ∼ 300°C during an average retention time of 1 - 10 hours to produce the P(ET-CT) of the present invention. Preferably, the pressure of the polycondensation reaction eventually reaches to less than 2.0 mm Hg, and the esterification reaction or the trans-esterification reaction and the polycondensation reaction are carried out under an inert gas atmosphere.

The polyester/polycarbonate blend of the present invention can be prepared by using conventional blending methods such as injection molding, extrusion molding and compounding process. The Color-b (yellowness) of polyester/polycarbonate blend, based on a sample having 3 mm thickness according to the present invention is 4 or less, preferably 1 to 3. In the polyester/polycarbonate blend manufactured by using the P(ET-TC) prepared in the presence of a conventional titanium catalyst, the 1,4-CHDM which has relatively weak thermal stability other than the other kinds of diol components, is discolored by the titanium component, and thus the blend can be discolored and yellowed. However, since the polyester/polycarbonate blend of the present invention using the P(ET-CT) prepared in the presence of the germanium catalyst has Color-b of 4 or less, the polyester/polycarbonate blend of the present invention is not discolored, thus increasing color-L(Lightness) and transparency of the blend.

Hereinafter, examples and comparative examples are provided to illustrate the present invention in more detail, but the present invention is not restricted or limited by the following examples and comparative examples.

### [Manufacturing Example] Preparation of P(ET-CT)(poly(ethylene terephthalate-co-1,4-cyclohexylene dimethylene terephthalate))

3440g of terephthalic acid as an acid component, 2949g of 1,4-cyclohexanedimethanol (60 mol%) and ethyleneglycol (40 mol%) as diol components were added to the reactor of 7L volume and heated at 240 to 300°C. Then 0.0064g of germanium catalyst was added to the reactor and then esterification reaction or trans-esterification reaction was carried out at 0.2 to 3.0kg/cm² of pressure and 200 to 300°C of temperature during an average retention time of 2 to 10 hours. The product of the esterification reaction or trans-esterification reaction was polycondensated at 400 to 0.1 mm Hg of reduced pressure and 240 to 300°C of temperature during the average retention time of 1 to 10 hours to obtain 4,000g of P(ET-CT).

### [Examples 1 to 6] Preparation of polyester/polycarbonate blend and evaluation thereof

According to the amount described in Table 1, PC (LG-DOW, MI: 30) which was dried at 120°C for 5 hours with a dehumidifying dryer, P(ET-CT) (Manufacturing example) which was dried at 80°C for 5 hours with the dehumidifying dryer, PET (polyethylene terephthalate) (Brand name: SKYPET, SK Chemicals Co., Ltd.) which was dried at 70°C for 80 hours with the dehumidifying dryer were added in a reactor well-dehumidified, and then tumbled for 3 minutes to be mixed. The polyester/polycarbonate blend was injection molded with a cold runner (water-cooling) type mold which can produce sample of 3.0 mm thickness / 40 mm X 40 mm size and sample of 3 mm thickness / 12 mm X 120 mm size, to produce the samples of 3.0 mm thickness. In the injection molding machine, L/D(Length/Diameter) of a screw was 23, and a compression ratio was 3. The Color-b of the sample were measured with a color measuring instrument (Nippon Denshoku, 300A) and the heat deformation temperature (HDT) were measured at 0.45 Mpa of pressure with a HDT measuring device (Ceast, HDT-VICAT). The results thereof are listed in the following Table 1.

**[Table 1]**

| | PC (wt%) | P(ET-CT) (wt%) | PET (wt%) | Ge catalyst (ppm) | Color-b | HDT (°C) |
|---|---|---|---|---|---|---|
| Example 1 | 20 | 20 | 60 | 100 | 0.9 | 80 |
| Example 2 | 20 | 40 | 40 | 100 | 1.5 | 80 |
| Example 3 | 30 | 10 | 60 | 100 | 1.3 | 85 |
| Example 4 | 30 | 20 | 50 | 100 | 1.7 | 85 |
| Example 5 | 40 | 10 | 50 | 100 | 2.9 | 90 |
| Example 6 | 40 | 20 | 40 | 100 | 3.8 | 90 |

From the Table 1, the polyester/polycarbonate blend of the present has Color-b of 4 or less, thus having superior color stability (transparency). Also, the polyester/ polycarbonate blend of the present invention has HDT of 80°C or more to have superior thermal stability. The used amount of the PET is 1 to 6 times (weight ratio) with respect to the P(ET-CT) which is relatively expensive. Thus, the polyester/ polycarbonate blend of the present invention is economical in comparison with the polyester/ polycarbonate blend containing only the P(ET-CT) as the polyester component.

## Claims

1. A polyester/polycarbonate blend comprising:
(a) P(ET-CT) (poly(ethylene terephthalate-co-1,4-cyclohexylene dimethylene terephthalate) which is copolymerized with 1,4-cyclohexanedimethanol (CHDM) of 40 to 90 mol % with respect to total diol components;
(b) polyethylene terephthalate (PET);
(c) polycarbonate (PC); and
(d) germanium of 1 to 100 ppm (weight ratio) with respect to total polyester/polycarbonate blend,
wherein with respect to total polyester/polycarbonate blend, the amount sum of the P(ET-CT) and PET is 50 to 90 weight%, the amount of the PET is 1 to 6 times in weight ratio with respect to the P(ET-CT), and the amount of the PC is 10 to 50 weight% and
wherein the germanium is contained as a catalyst in the P(ET-CT) polymerization, and an amount of the catalyst is 20 to 200 ppm (weight ratio) with respect to the polymerized P(ET-CT).

2. The polyester/polycarbonate blend according to claim 1, wherein the polyester/polycarbonate blend is molded by a method selected from the group consisting of injection molding, extrusion molding and compounding process, and a Color-b (yellowness) of the polyester/polycarbonate blend, based on a sample having 3mm thickness, is 4 or less.

## Patentansprüche

1. Polyester-/Polycarbonat-Mischung umfassend:
(a) P(ET-CT) (Poly(ethylenterephthalat-co-1,4-cyclohexylendimethylenterephthalat), das mit 1,4-Cyclohexandimethanol (CHDM) von 40 bis 90 Mol-% bezogen auf die gesamten Diolkomponenten copolymerisiert ist;
(b) Polyethylenterephthalat (PET);
(c) Polycarbonat (PC); und
(d) Germanium von 1 bis 100 ppm (Gewichtsverhältnis) bezogen auf die gesamte Polyester-/Polycarbonat-Mischung,
wobei bezogen auf die gesamte Polyester/Polycarbonat-Mischung, die Mengensumme von P(ET-CT) und PET 50 bis 90 Gew.-%, die Menge des PET 1 bis 6 mal das Gewichtsverhältnis bezogen auf das P(ET-CT), und die Menge des PC 10 bis 50 Gew.-% beträgt, und
wobei das Germanium als Katalysator in der P(ET-CT) Polymerisation enthalten ist, und die Menge des Katalysators 20 bis 200 ppm (Gewichtsverhältnis) bezogen auf das polymerisierte P(ET-CT) beträgt.

2. Polyester/Polycarbonat-Mischung gemäß Anspruch 1, wobei die Polyester/Polycarbonat-Mischung mittels eines Verfahrens ausgewählt aus der Gruppe bestehend aus Spritzgießen, Strangpressen und Compoundieren geformt wird, und die Farbe-b (Gelbgrad) der Polyester/Polycarbonat-Mischung, basierend auf einer Probe mit 3 mm Dicke, 4 oder weniger ist.

## Revendications

1. Mélange polyester/polycarbonate comprenant :
(a) un P(ET-CT) [poly(téréphtalate d'éthylène-co-téréphtalate de 1,4-cyclohexylène-diméthylène)] qui est copolymérisé avec le 1,4-cyclohexanediméthanol (CHDM) à de 40 à 90 % en moles par rapport au total des composants diols ;
(b) un polytéréphtalate d'éthylène (PET) ;
(c) un polycarbonate (PC) ; et
(d) du germanium à de 1 à 100 ppm (rapport en poids) par rapport au mélange polyester/polycarbonate total,
où, par rapport au mélange polyester/polycarbonate total, la somme des quantités de P(ET-CT) et de PET va de 50 à 90 % en poids, la quantité de PET, en rapport en poids, est de 1 à 6 fois celle du P(ET-CT) et la quantité de PC va de 10 à 50 % en poids et
où le germanium est contenu en tant que catalyseur pour la polymérisation du P(ET-CT) et où une quantité du catalyseur va de 20 à 200 ppm (rapport en poids) par rapport au P(ET-CT) polymérisé.

2. Mélange polyester/polycarbonate selon la revendication 1, où le mélange polyester/polycarbonate est moulé par une méthode sélectionnée dans le groupe consistant en un moulage par injection, un moulage par extrusion et un processus de compoundage, et où l'intensité de la Couleur b (couleur jaune) du mélange polyester/polycarbonate, sur la base d'un échantillon d'une épaisseur de 3 mm, est inférieure ou égale à 4.
